# EUROPEAN PATENT SPECIFICATION

(11) **EP 0 420 659 B1**
(45) Date of publication and mention of the grant of the patent: **05.08.1998**
(21) Application number: 90310628.4
(22) Date of filing: 28.09.1990
(51) Int. Cl.: G11B 7/24

(54) **Method of recording and reproducing information using an optical information storage medium**
Methode zur Aufzeichnung und Wiedergabe von Informationen mittels eines Mediums für optische Datenspeicherung
Méthode d'enregistrement et de restitution d'informations utilisant un médium pour mémoires optiques

(30) Priority: 29.09.1989 JP 255623/89
(43) Date of publication of application: 03.04.1991
(73) Proprietor: MATSUSHITA ELECTRIC INDUSTRIAL CO., LTD., Kadoma-shi, Osaka-fu, 571 (JP)
(72) Inventor: Ando, Eiji, Katano-shi, Osaka (JP); Suzuki, Masaaki, Neyagawa-shi, Osaka (JP); Moriyama, Kumiko, Hirakata-shi, Osaka (JP)
(74) Representative: Cresswell, Thomas Anthony

(56) References cited:
- EP-A- 179 436
- EP-A- 193 931
- EP-A- 218 263
- EP-A- 230 024
- EP-A- 231 858
- EP-A- 272 935
- THIN SOLID FILMS. vol. 160, no. 1, June 1988, LAUSANNE CH pages 299 - 302; M. Tanaka et al.: "The spontaneous formation of a J-like aggregate in Langmuir- Blodgett films of a squarylium dye"
- JOURNAL OF THE SOCIETY OF DYERS AND COLOURISTS. vol. 104, no. 3, March 1988, BRADFORD GB pages 121 - 125; H. Nakazumi: "Organic colorants for laser disc optical data storage"
- PATENT ABSTRACTS OF JAPAN vol. 9, no. 215 (M-409)(1938) 03 September 1985, & JP-A-60 73892 (TDK K. K.) 26 April 1985,
- THIN SOLID FILMS. vol. 132, no. 1/4, October 1985, LAUSANNE CH pages 185 - 192; T. L. Penner, D. Möbius: "The formation of mixed J-aggregates of cyanine dyes in Langmuir-Blodgett monolayers"* Table I
- PATENT ABSTRACTS OF JAPAN vol. 13, no. 231 (P-878)() 29 May 1989, & JP-A-01 039647 (SANYO ELECTRIC CO. LTD.) 09 February 1989,

## Description

This invention relates to optical information storage media which make use of a recording layer which undergoes a variation in refractive index in absorption regions of a wavelength which is absorbed in the recording layer.

Several optical information storage or recording systems are known in the art as applicable to optical disks. Of these, there have often been used systems where optical storage media are irradiated with recording light and the transmittance or reflectance of the optical storage medium varies in portions where the light is absorbed. This variation is utilized for detection of the optical information. The optical storage media usually include, on a substrate, a recording layer, a reflective layer and a protective layer. The reflective and protective layers are used to ensure a great reproduction output. Various materials are used as the storage or recording layer of the medium. and include, for example, metallic compounds. organic dyes, photochromic compounds and the like.

In this arrangement, when the recording is performed by light absorption, the variation in the optical constant of the storage layer is so small that the reflective layer and an optically designed protective layer are essential for enhancing reproduction characteristics. This requires an additional number of layers in order to constitute the optical storage medium with an additional number of fabrication steps.

In addition, the variation in the optical constant extends over a wide wavelength range, so that proper selection to a wavelength from a light source is not possible for recording and reproducing information.

EP-A-0,218,263 discloses a recording medium comprising a substrate, a reflective layer and a recording layer. The recording layer includes dyes capable of forming J-aggregates and information is reproduced by detecting changes in the reflectivity of the medium.

The present invention provides a method of recording and reproducing information using an optical information storage medium which comprises a substrate and at least one recording layer formed on the substrate but does not contain any reflective layer; each recording layer being made of a material which is a J-aggregate of a photochromic compound or dye and which undergoes a change in refractive index upon absorbing light at an absorption maximum wavelength of the layer;
information being recorded in one of said recording layers by imagewise exposing the recording layer to light of a wavelength corresponding to an absorption maximum wavelength of the recording layer; and
recorded information being reproduced by detecting a variation in the intensity of reflected light of a wavelength corresponding to said absorption maximum of the recording layer between recorded and non-recorded areas of the exposed recording layer.

When two or more different compounds showing the great variations are used as different recording layers, multiple optical storage media can be fabricated.

Since the recording layer or layers of the medium according to the invention are made of materials which exhibit great variations in refractive index in light absorbed regions of the layer or layers from non-absorbed regions, recording is possible by satisfactory absorbtion of light in the layer. When the layer or layers are irradiated with light for reproduction, a great variation or variations in reflectance are produced because of the variation in refractive index, so that the recorded information can be stably read out. This reproduction relies only on the variation of the refractive index in the recording layer or the reflectance from the medium and any additional layers such as a reflective layer are not necessary in the storage medium according to the invention. Preferably, the change in refractive index causes a change in the intensity of reflected light between recorded and non-recorded areas of at least 10%.

Since the optical storage medium according to the invention makes use of a recording layer whose variation in refractive index is great in light absorbed regions of the layer, proper selection to wavelengths of light for recording and reproduction is possible. J-Aggregates of dyes or photochromic compounds exhibit a sharp absorbtion, high selectivity to a wavelength is ensured using a light source capable of generating a wavelength corresponding to an absorption maximum wavelength of the layer. Once recorded, information can be detected or reproduced using an intensity of reflected light at an absorption maximum of the recording layer. Using at least two recording layers having different sharp absorption maximum wavelengths, multiple optical storage media can be fabricated without use of any reflective layer. The present invention therefore also provides a recording medium wherein said recording layer is constituted of at least two sub-layers of material which have different absorption maximum wavelengths and which undergo different changes in refractive index upon absorbing light at their absorption maximum wavelengths.

### BRIEF DESCRIPTION OF THE DRAWINGS

Fig. 1 is a relative intensity of reflected light prior to and after recording of a layer of a photochromic compound in relation to the variation in wavelength; and
Figs. 2A to 2C are, respectively, relative intensities of reflected light prior to and after recording in relation to the variation in wavelength for different dyes in a multiple optical information storage medium.

The optical information storage medium according to the invention consists of a substrate and an optical information storage or recording layer formed on the substrate. The medium according to the invention does not need any reflective layer. In the practice of the invention, information signals are detected as a variation in reflectance accompanied by a variation in refractive index which occurs by optical recording. In practice, the variation of the reflectance is detected as a variation in the intensity of reflected light between recorded and non-recorded portions.

The substrate used in the present invention should have a smooth surface in order that the variation in reflectance is accurately detected. Examples of materials for the substrate may be quartz, glass, synthetic resins such as polycarbonates, poly(methyl methacrylate), epoxy resins and the like ordinarily used for this purpose. The substrate may take any form such as a disk, a plate, a sheet, a tape or the like.

The recording layer formed on the substrate should be made of any material which undergoes a great variation in refractive index when absorbing light at a given wavelength. In view of the variation, J-aggregates of photochromic compounds or dyes are used in the practice of the invention. Examples of the photochromic compounds include spiropyran compounds, tulgide compounds, azobenzene compounds and the like. Examples of the dyes include cyanine dyes, merocyanine dyes and phthalocyanine dyes. All of these compounds and dyes can form J-aggregates.

Specific and preferred examples of the spiropyran compounds are those of the following general formula 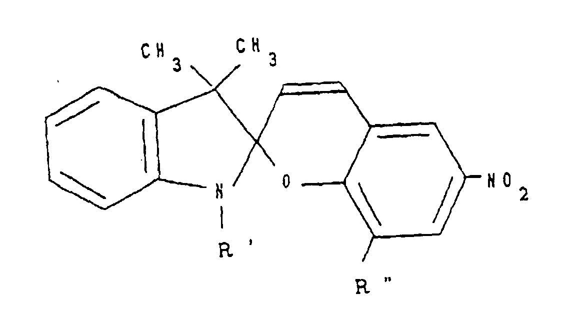 wherein R' represents a hydrocarbon group having from 1 to 30 carbon atoms and R" represents a hydrogen atom, a nitro group, a ketoalkyl group having from 1 to 30 carbon atoms, an alkoxy group having from 1 to 30 carbon atoms, a halogen atom such as chlorine, iodine, bromine or fluorine, an alkanoyloxymethyl group having from 1 to 30 carbon atoms, or a carboxyl group having from 1 to 30 carbon atoms. More preferably, in the above formula, R' represents a hydrocarbon group having from 8 to 24, most preferably from 16 to 20, carbon atoms and R" represents a methoxy group or an alkanoyloxymethyl group having from 12 to 24 carbon atoms. These spiropyran compounds readily form aggregates by irradiation with UV rays.

Also, azobenzene compounds of the following formula are preferably used 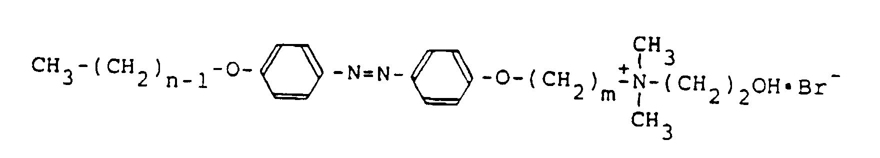 wherein n is an integer of from 4 to 20 and m is an integer of from 4 to 20.

Specific and preferred examples of the dyes include cyanine dyes capable of forming J-aggregates and represented by the following formula

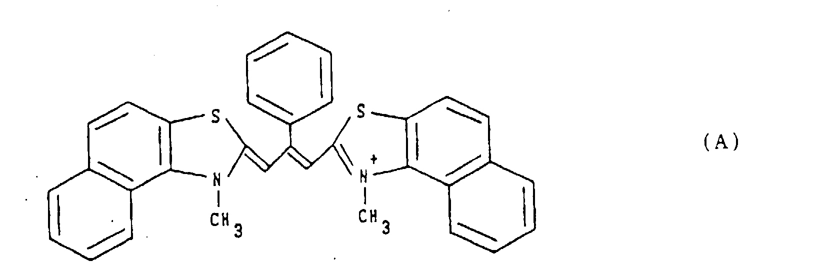

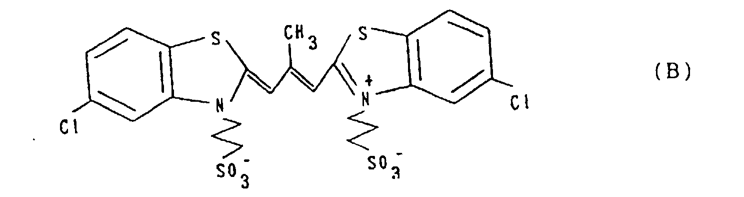

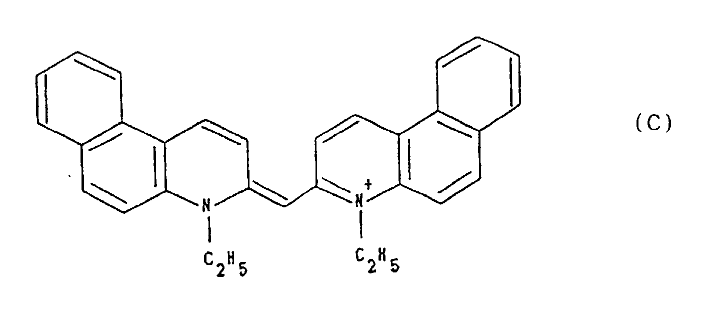

In addition, merocyanine dyes and squarilium dyes of the following formulae are likewise used 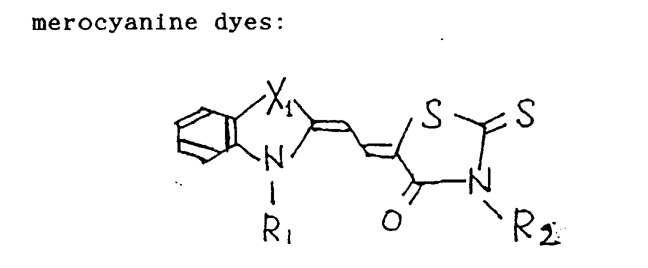 wherein X₁ represents C(CH₃)₂, O, S or Se, R₁ represents (CH₂)ₙ₋₁CH3 wherein n is an integer of 1 to 20, R₂ represents (CH₂)ₙ₋₁CH₃ wherein n is an integer of from 1 to 10 or (CH₂)ₙ₋₁COOH wherein n is an integer of from 1 to 4. 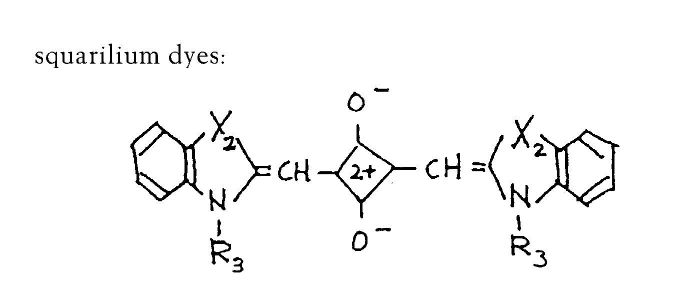 wherein each X₂ represents C(CH₃)₂, S or Se, and each R₃ represents (CH₂)ₙ₋₁CH3 wherein n is an integer of 1 to 30 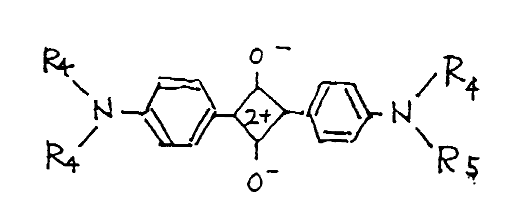 wherein each R₄ and R₅ represent (CH₂)ₙ₋₁CH₃ wherein n is an integer of from 1 to 30.

Also, mixtures of pyrilium dyes and polycarbonates of the following formulas are also usable as capable of forming J-aggregates 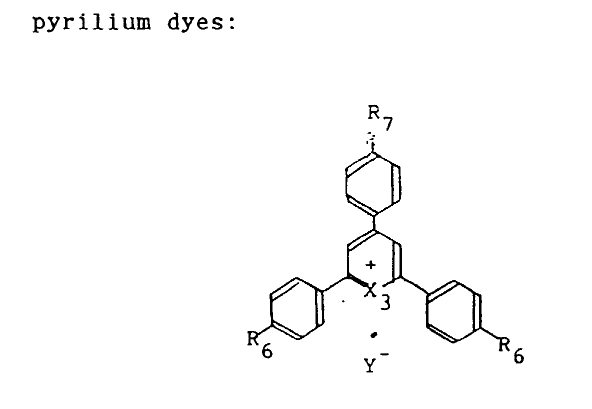 wherein X₃ represents O or S, Y represents Cl⁻, ClO₄⁻ or BF₄⁻, R₆ represents H or CH₃, and R₇ represents H, CH₃, N(C₂H₅)₂, or N(CH₃)₂ 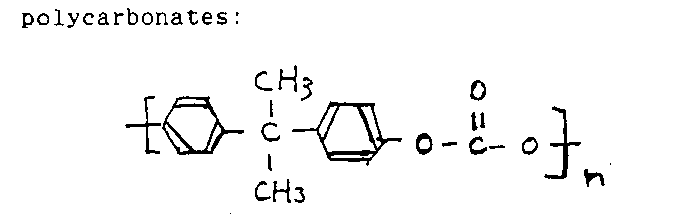 wherein n is an integer.

The "great variation in refractive index" used herein is intended to mean that a variation from non-recorded portions in the intensity of reflected light at an absorption maximum wavelength is approximately in the range of not less than 10%, preferably from 10 to 80%.

It should be noted that when the photochromic compounds are used as a recording layer, the resultant medium is of the erasable type, whereas the medium using the dyes is not erasable of once recorded information.

The optical information storage medium according to the invention can be fabricated by any known thin film formation technique. For instance, the recording layer may be formed by the Langmuir-Blodgett method (hereinafter referred to simply as LB method) by building up a desired number of monolayers of the material used. Alternatively, spin coating, vacuum deposition and the like techniques ordinarily used in thin film formation may also be used in the practice of the invention. The recording layer is generally formed in a thickness of from 20 to 1000 angstroms.

If the recording layer is formed of two or more sub-layers of materials exhibiting different absorption maxima, the respective materials are subjected to thin film formation on a substrate to obtain a multiple optical information storage medium. The materials should preferably be so selected that the absorption maximum wavelengths for the materials are different from one another by at least a half width of the absorption maximum spectrum. The respective sub-layers should preferably be separated from each other through a separation layer, thereby preventing a thermal crosstalk. The separation layer formed between adjacent sub-layers may be made of a material which does not impede light transmittance. Examples of the material include fatty acids or salts thereof having from 10 to 22 carbon atoms, polyvinyl alcohol, poly(methyl methacrylate), polystyrene and the like. The layer is formed as thin as possible and is generally in a thickness of from 20 to 1000 angstroms.

In operation, if the recording layer is formed of a J-aggregate of a spiropyran compound, this layer is first initialized by uniform UV irradiation over the layer. In this state, the recording layer is colored and is ready for recording of optical information with use, for example, of a semiconductor laser device capable of oscillating an intended wavelength. When irradiated with the laser device. the recording layer is converted to a colorless state at portions where irradiated. This leads to a variation in refractive index, thereby causing a variation in the intensity of reflected light from the medium.

When the optically recorded medium is subjected to UV irradiation, the recording layer is entirely colored along with a variation in the refractive index and thus, the information is erased. Thus, recording and erasure can be effected repeatedly.

Reproduction of the recorded information is effected by irradiating the medium with a laser beam with a wavelength corresponding to an absorption maximum wavelength of the aggregate, thereby detecting a variation in the intensity. The detection of the variation may be effected by any known techniques. Typically, the reflected light is passed through a prism to a photodiode to detect the intensity of the reflected light as an electromotive force.

When the optical information storage medium has a recording layer made of two or more sub-layers. The respective layers should be made of different compounds capable of forming J-aggregates and sensitive to different wavelengths. For recording, light having an oscillation wavelength corresponding to the respective absorption maxima is used at such an energy level that a variation in the intensity of reflected light at the absorption maximum wavelength is approximately 50%. By the application of the light, the compounds in the respective sub-layers are converted into a colored or colorless state. For detection, absorption maximum wavelengths of the J-aggregates are applied to the sub-layers, respectively, to detect the variations in the intensity of reflected light from non-converted portions.

The present invention is more particularly described by way of examples.

### Example 1

A spiropyran compound of the following formula (hereinafter referred to simply as SP1822) was mixed with octadecane at a mixing ratio of 1:2 and applied onto a quartz substrate according to the LB method to form five monolayers for use as a recording layer

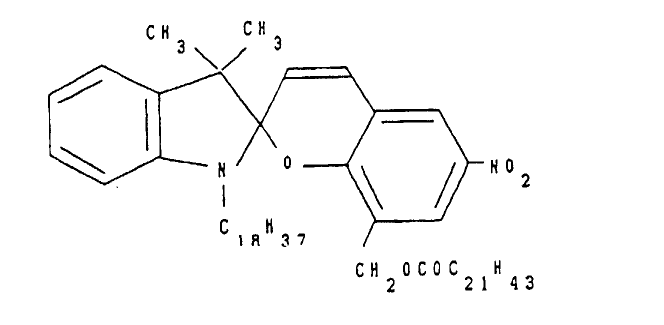

The LB method was carried out under the following conditions:
- Aqueous phase conditions:: pure water, 20°C, pH = 5 - 7
- Build-up conditions:: surface pressure = 20 to 40 mN/m
- Build-up speed:: ID mm/minute

The thin film could be formed at a built-up ratio of about 1.

After the formation of the monolayers, the monolayers were subjected to UV irradiation at 35°C to form a recording layer. At this stage, the SP1822 was converted into a J-aggregate which was colored. While the SP1822 had an absorption at 570 nm, the J-aggregate exhibited a sharp absorption at 618 nm, thus ensuring a high selectivity to wavelength.

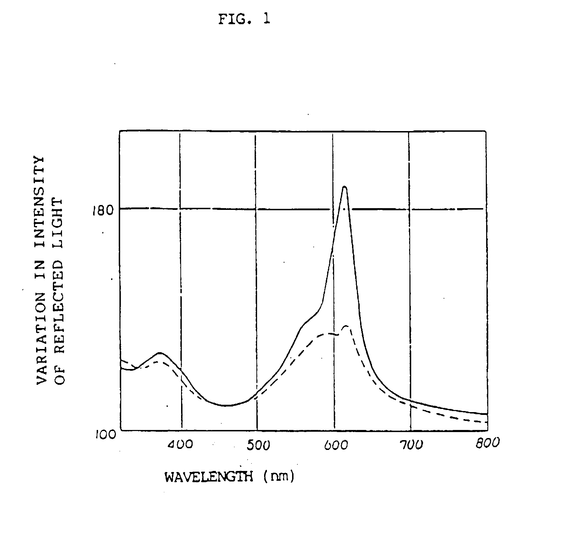

In Fig. 1, there is shown a recording characteristic of the optical information storage medium obtained above. In the figure, the solid line indicates a relative intensity of reflected light prior to recording, and the dotted line indicates a similar intensity after the recording. Optical recording was effected by irradiating the UV-irradiated medium with a He-Ne laser with an oscillation wavelength of 632.8 nm which is close to an absorption maximum wavelength of the recording layer. Since the absorption took place at a wavelength of the laser beam, the colored J-aggregate gas converted to a colorless state at portions absorbing the beam. By this, the refractive index of the recording layer was changed, thus causing a great variation in the quantity of reflected light in the absorption wavelength region.

When the recording layer which had been irradiated with the laser beam was subjected to UV irradiation, the colorless portions were again colored wherein the refractive index was returned to the initial state, so that the recording layer was in an erased state. Thus, the medium could be recorded and erased repeatedly, if desired.

### Example 2

Three cyanine dyes of the following formula (A), (B) and (C) capable of forming J-aggregates were used and subjected to thin film formation on a quartz substrate according to the LB method wherein the dyes (A) and (B) were mixed with arachidic acid and the dye (B) was mixed with dioctadecyl diemthyl ammonium and methyl stearate

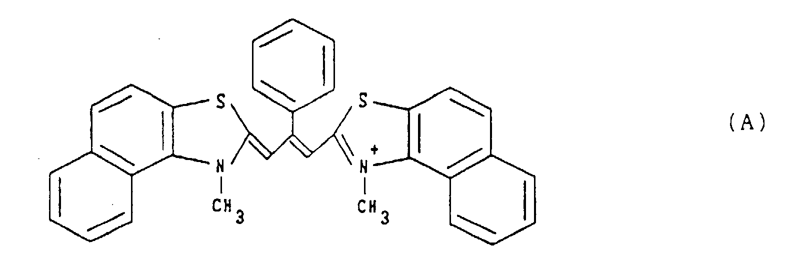

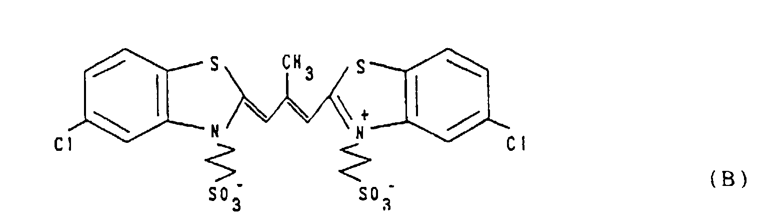

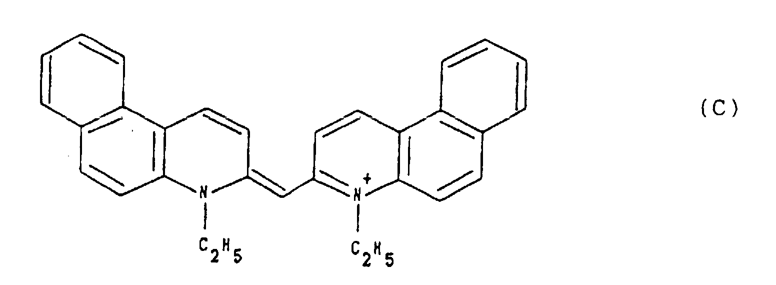

For the formation of the thin films of the respective dyes, a separation layer of cadmium arachidate was provided between adjacent films in order to prevent a thermal crosstalk. As a result, a multiple optical information storage medium could be obtained in which absorption wavelengths were different for the respective films and multiple storage was possible using the different light rays having wavelengths corresponding to the respective absorption wavelengths.

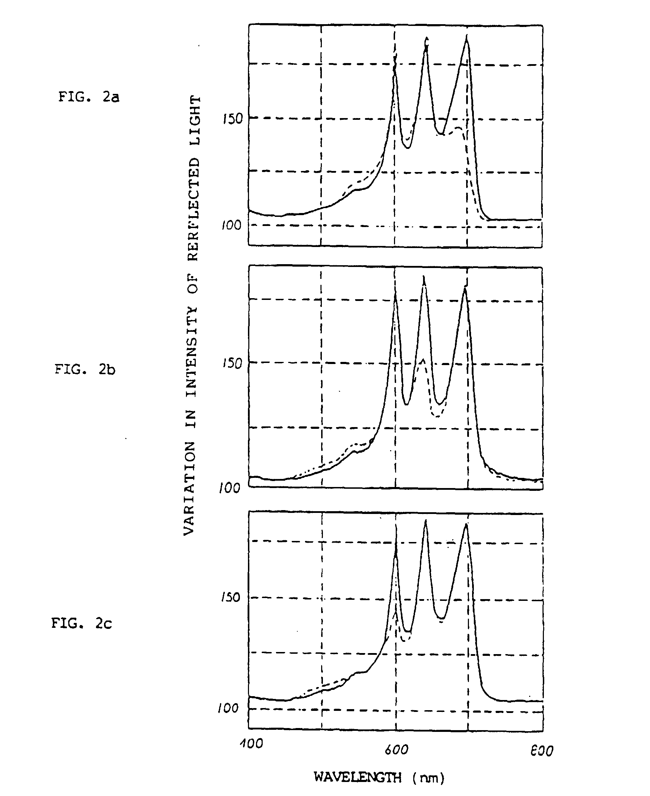

In Figs. 2A to 2C, there are, respectively, shown variations in the intensity of reflected light from the respective layers. In the respective figures, the solid line indicates the intensity of reflected light prior to recording and the dotted line indicates the intensity after the recording. When light is absorbed in the individual layers, the refractive index greatly varies, so that the recording is performed using light rays with oscillation wavelengths corresponding to absorption maxima. The recording energy level should preferably be such that a variation in the quantity of reflected light at an absorption maximum wavelength is approximately 50%. The wavelengths of detection light for the respective layers should correspond to absorption maximum wavelengths of the J-aggregates of the dyes A, B and C. More particularly, the wavelengths were, respectively, 700 nm, 640 nm and 600 nm for aggregates of the dyes A, B and C. The absorption maximum wavelengths of the respective recording sub-layers were kept apart from each other at not less than the half-widths of the respective dye absorption peaks.

By this, the multiple optical storage medium involved no crosstalk by light absorption.

## Claims

1. A method of recording and reproducing information using an optical information storage medium which comprises a substrate and at least one recording layer formed on the substrate but does not contain any reflective layer; each recording layer being made of a material which is a J-aggregate of a photochromic compound or dye and which undergoes a change in refractive index upon absorbing light at an absorption maximum wavelength of the layer;
information being recorded in one of said recording layers by imagewise exposing the recording layer to light of a wavelength corresponding to an absorption maximum wavelength of the recording layer; and
recorded information being reproduced by detecting a variation in the intensity of reflected light of a wavelength corresponding to said absorption maximum of the recording layer between recorded and non-recorded areas of the exposed recording layer.

2. A method according to claim 1, wherein the material of the recording layer is such that the change in the refractive index causes a change in the intensity of reflected light between recorded and non-recorded areas of at least 10%.

3. A method according to claim 1 or 2 wherein said material is a J-aggregate of a photochromic spiropyran compound of the formula 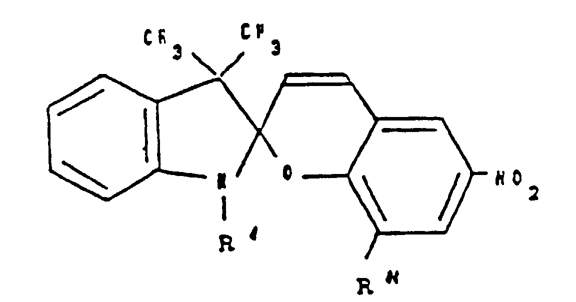 wherein R' represents a hydrocarbon group having from 1 to 30 carbon atoms and R" represents a hydrogen atom, a nitro group, a ketoalkyl group having from 1 to 30 carbon atoms, an alkoxy group having from 1 to 30 carbon atoms, a halogen atom, an alkanoyloxymethyl group having from 1 to 30 carbon atoms, or a carboxyl group having from 1 to 30 carbon atoms.

4. A method according to claim 3, wherein R' represents a hydrocarbon group having from 8 to 24 carbon atoms and R" represents a methoxy group or an alkanoyloxymethyl group having from 12 to 24 carbon atoms.

5. A method according to claim 1 or 2 wherein said material is a J-aggregate of a photochromic azobenzene compound of the formula 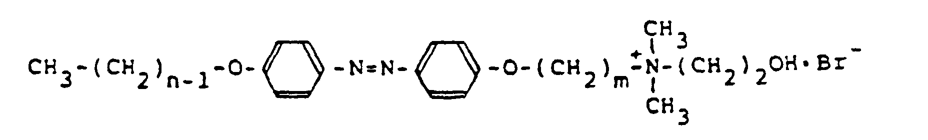 wherein n is an integer of from 4 to 20 and m is an integer of from 4 to 20.

6. A method according to claim 1 or 2, wherein said material is a J-aggregate of a dye.

7. A method according to claim 6, wherein said dye is a cyanine dye of the formula

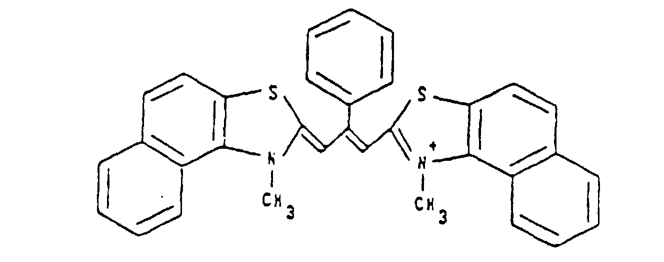

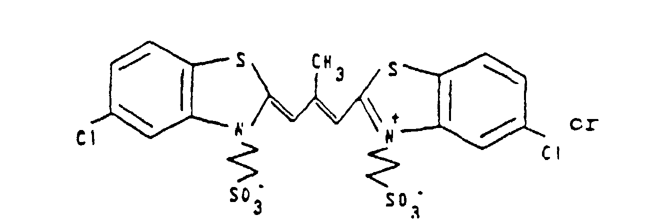

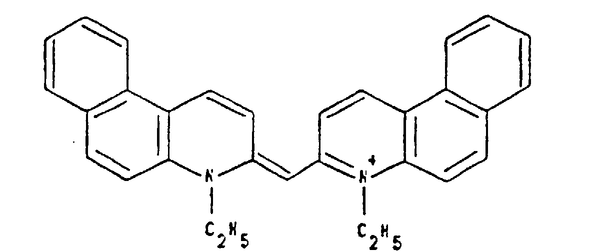

8. A method according to claim 6, wherein said dye is a merocyanine dye of the formula 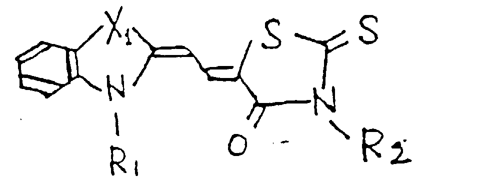 wherein X₁ represents (C(CH₃)₂, O, S or Se, R₁ represents (CH₂)ₙ₋₁CH₃ wherein n is an integer of 1 to 20, R₂ represents (CH₂)ₙ₋₁CH₃ wherein n is an integer of from 1 to 10 or (CH₂)ₙ₋₁COOH wherein n is an integer of from 1 to 4.

9. A method according to claim 6, wherein said dye is a squarilium dye of the formula 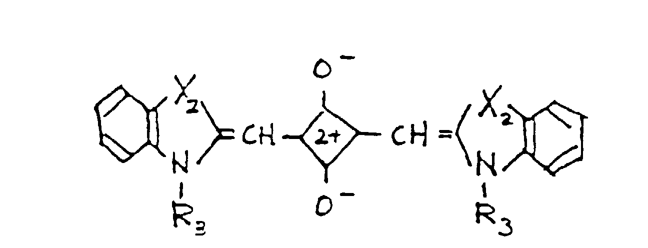 wherein each X₂ represents C(CH₃)₂, S or Se, and each R₃ represents (CH₂)ₙ₋₁CH₃ wherein n is an integer of 1 to 30, or 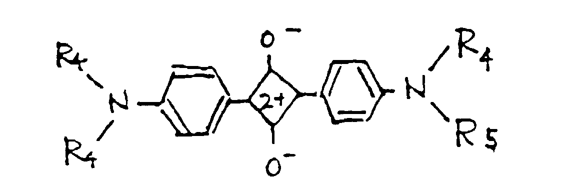 wherein each R₄ and R₅ represent (CH₂)ₙ₋₁CH₃ wherein n is an integer of from 1 to 30.

10. A method according to claim 1 or 2 wherein said material is a mixture of a pyrilium dye and a polycarbonate of the respective formulas, 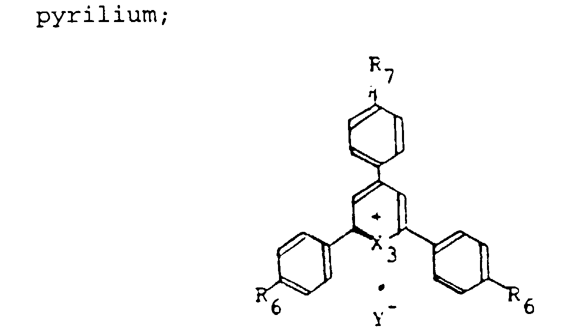 wherein X₃ represents O or S, Y represents Cl⁻, ClO₄⁻ or BF₄⁻, each R₆ represents H or CH₃, and R₇ represents H, CH₃, N(C₂H₅)₂, or N(CH₃)₂ 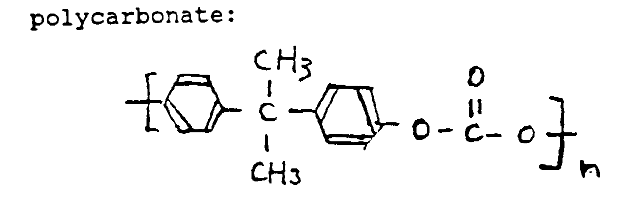 wherein n is an integer.

11. A method according to any one of the preceding claims wherein said recording layer is constituted of at least two sub-layers of material which have different absorption maximum wavelengths and which undergo different changes in refractive index upon absorbing light at their absorption maximum wavelengths.

## Patentansprüche

1. Verfahren zur Aufzeichnung und Wiedergabe von Information unter Verwendung eines Mediums zur optischen Informationsspeicherung, das ein Substrat und mindestens eine Aufzeichnungsschicht umfaßt, die auf dem Substrat gebildet ist, aber keinerlei Reflexionsschicht enthält; wobei jede Aufzeichnungsschicht aus einem Material gefertigt ist, das ein J-Aggregat einer photochromen Verbindung oder eines Farbstoffs ist, und das bei der Absorption von Licht mit der Wellenlänge eines Absorptionsmaximums der Schicht eine Änderung des Brechungsindex erfährt;
wobei die Information in einer der Aufzeichnungsschichten durch ein bildweises Belichten der Aufzeichnungsschicht mit Licht einer Wellenlänge, die der Wellenlänge eines Absorptionsmaximums der Aufzeichnungsschicht entspricht, aufgezeichnet wird; und
wobei die aufgezeichnete Information durch die Ermittlung einer Variation der Intensität des reflektierten Lichts einer Wellenlänge, die dem Absorptionsmaximum der Aufzeichnungsschicht entspricht, zwischen Bereichen der belichteten Aufzeichnungsschicht, an denen eine Aufzeichnung stattfand, und Bereichen der belichteten Aufzeichnungsschicht, an denen keine Aufzeichnung stattfand, reproduziert wird.

2. Verfahren nach Anspruch 1, in dem das Material der Aufzeichnungsschicht so beschaffen ist, daß die Änderung des Brechungsindexes eine Änderung der Intensität des reflektierten Lichts zwischen Bereichen, an denen eine Aufzeichnung stattfand, und Bereichen, an denen keine Aufzeichnung stattfand, von mindestens 10% verursacht.

3. Verfahren nach Anspruch 1 oder Anspruch 2, in dem das Material ein J-Aggregat einer photochromen Spiropyranverbindung mit der nachstehenden Formel ist: 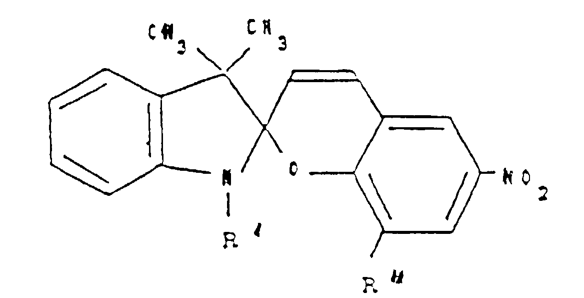 worin R' eine Kohlenwasserstoffgruppe mit 1 bis 30 Kohlenstoffatomen darstellt und R" ein Wasserstoffatom, eine Nitrogruppe, eine Ketoalkylgruppe mit 1 bis 30 Kohlenstoffatomen, eine Alkoxygruppe mit 1 bis 30 Kohlenstoffatomen, ein Halogenatom, eine Alkanoyloxymethylgruppe mit 1 bis 30 Kohlenstoffatomen oder eine Carboxylgruppe mit 1 bis 30 Kohlenstoffatomen darstellt.

4. Verfahren nach Anspruch 3, in dem R' eine Kohlenwasserstoffgruppe mit 8 bis 24 Kohlenstoffatomen darstellt und R" eine Methoxygruppe oder eine Alkanoyloxymethylgruppe mit 12 bis 24 Kohlenstoffatomen darstellt.

5. Verfahren nach Anspruch 1 oder Anspruch 2, in dem das Material ein J-Aggregat einer photochromen Azobenzolverbindung mit der nachstehenden Formel ist: 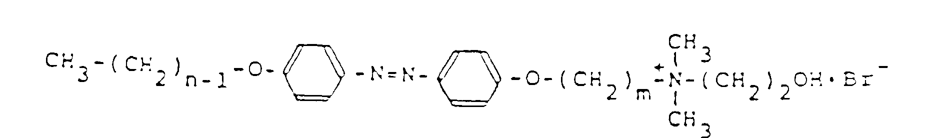 worin n eine ganze Zahl von 4 bis 20 und m eine ganze Zahl von 4 bis 20 ist.

6. Verfahren nach Anspruch 1 oder Anspruch 2, in dem das Material ein J-Aggregat eines Farbstoffs ist.

7. Verfahren nach Anspruch 6, in dem der Farbstoff ein Cyaninfarbstoff mit der nachstehenden Formel ist:

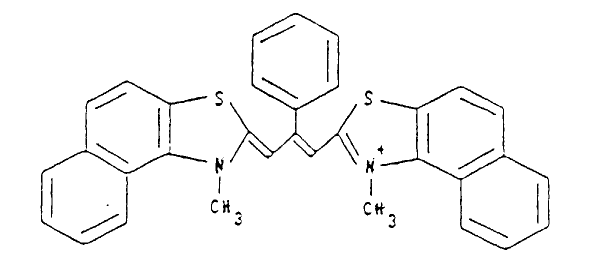

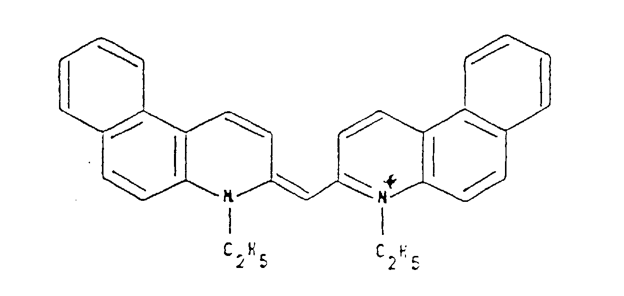

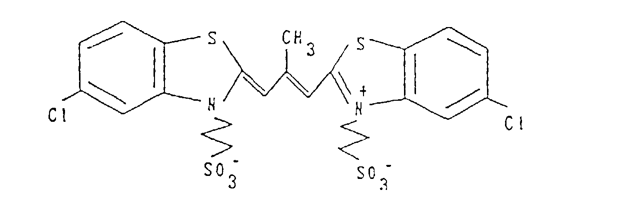

8. Verfahren nach Anspruch 6, in dem der Farbstoff ein Merocyaninfarbstoff mit der nachstehenden Formel ist: 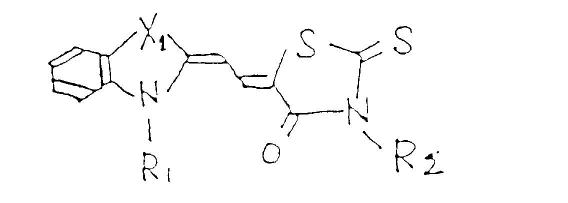 worin X₁ C(CH₃)₂, O, S oder Se darstellt, R₁ (CH₂)ₙ₋₁CH₃ darstellt, worin n eine ganze Zahl von 1 bis 20 ist, R₂ (CH₂)ₙ₋₁CH₃, worin n eine ganze Zahl von 1 bis 10 ist, oder (CH₂)ₙ₋₁COOH darstellt, worin n eine ganze Zahl von 1 bis 4 ist.

9. Verfahren nach Anspruch 6, in dem der Farbstoff ein Squariliumfarbstoff mit der nachstehenden Formel ist: 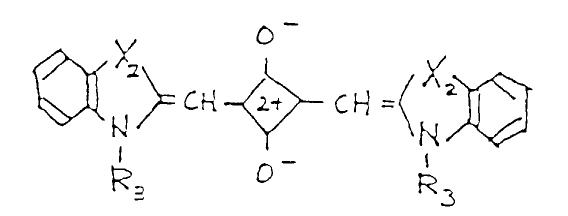 worin jedes X₂ C(CH₃)₂, S oder Se darstellt und jedes R₃ (CH₂)ₙ₋₁CH₃, worin n eine ganze Zahl von 1 bis 30 ist, oder 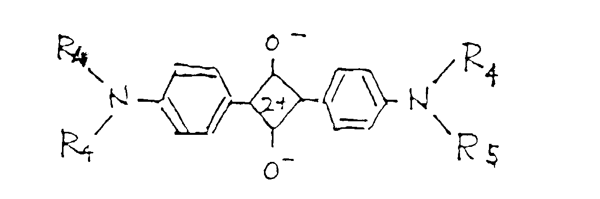 darstellt,
worin jedes R₄ und R₅ (CH₂)ₙ₋₁CH₃ darstellt, worin n eine ganze Zahl von 1 bis 30 ist.

10. Verfahren nach Anspruch 1 oder Anspruch 2, in dem das Material eine Mischung aus einem Pyriliumfarbstoff und einem Polycarbonat mit den entsprechenden, nachstehenden Formeln ist: 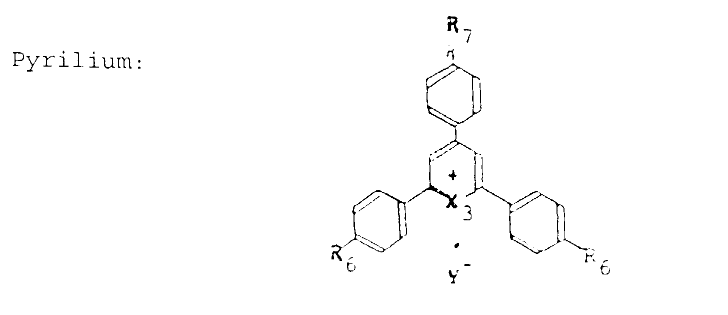 worin X₃ O oder S darstellt, Y Cl⁻, ClO₄⁻ oder BF₄⁻ darstellt, jedes R₆ H oder CH₃ darstellt, und R₇ H, CH₃, N(C₂H₅)₂ oder N(CH₃)₂ darstellt, 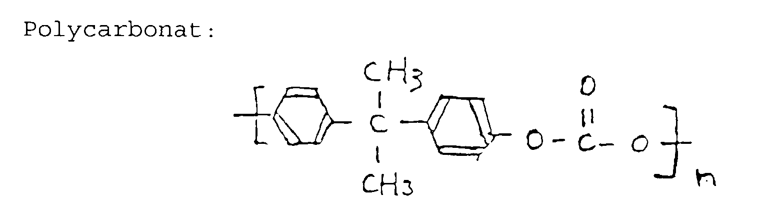 worin n eine ganze Zahl ist.

11. Verfahren nach einem der vorstehenden Ansprüche, in dem die Aufzeichnungsschicht aus mindestens zwei Unterschichten aus Materialien besteht, die unterschiedliche Wellenlängen bei den Absorptionsmaxima aufweisen und die unterschiedliche Änderungen des Brechungsindexes beim Absorbieren von Licht mit den Wellenlängen ihrer Absorptionsmaxima erfahren.

## Revendications

1. Procédé d'enregistrement et de reproduction d'informations utilisant un support de mémorisation d'informations optique qui comprend un substrat et au moins une couche d'enregistrement formée sur le substrat mais qui ne contient pas aucune couche réfléchissante, chaque couche d'enregistrement étant faite d'un matériau qui est un agrégat J d'un composé ou d'un colorant photochromique et qui subit un changement d'indice de réfraction lors de l'absorption de la lumière à une longueur d'onde d'absorption maximum de la couche,
les informations étant enregistrées dans l'une desdites couches d'enregistrement en exposant la couche d'enregistrement conformément à une image à la lumière d'une longueur d'onde correspondant à une longueur d'onde maximum d'absorption de la couche d'enregistrement, et
les informations enregistrées étant reproduites en détectant une variation de l'intensité de la lumière réfléchie d'une longueur d'onde correspondant à ladite absorption maximum de la couche d'enregistrement entre des zones enregistrées et non enregistrées de la couche d'enregistrement exposée.

2. Procédé selon la revendication 1, dans lequel le matériau de la couche d'enregistrement est tel que le changement d'indice de réfraction provoque un changement d'intensité de la lumière réfléchie entre les zones enregistrées et non enregistrées d'au moins 10%.

3. Procédé selon la revendication 1 ou 2, dans lequel ledit matériau est un agrégat J d'un composé de spiropyranne photochromique de formule 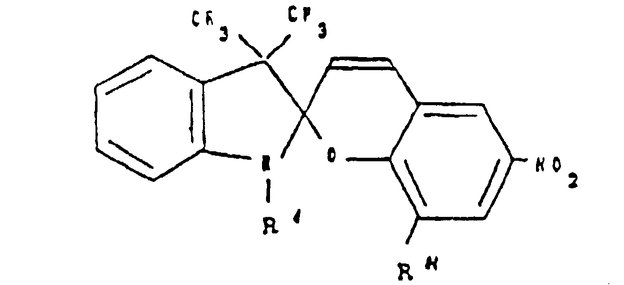 dans lequel R' représente un groupement hydrocarbure comportant de 1 à 30 atomes de carbone et R'' représente un atome d'hydrogène, un groupement nitro, un groupement cétoalkyle présentant de 1 à 30 atomes de carbone, un groupement alkoxy présentant de 1 à 30 atomes de carbone, un atome halogène, une groupement alkanoyloxyméthyle comportant de 1 à 30 atomes de carbone ou un groupement carboxyle présentant de 1 à 30 atomes de carbone.

4. Procédé selon la revendication 3, dans lequel R' représente un groupement hydrocarbure comportant de 8 à 24 atomes de carbone et R'' représente un groupe méthoxy ou un groupe alkanoyloxyméthyle comportant de 12 à 24 atomes de carbone.

5. Procédé selon la revendication 1 ou 2, dans lequel ledit matériau est un agrégat J d'un composé d'azobenzène photochromique de formule 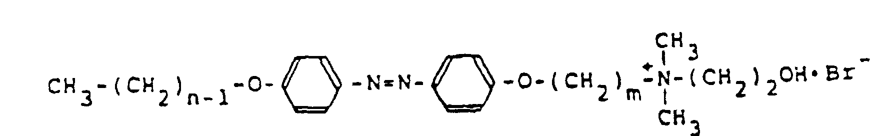 dans lequel n est un nombre entier entre 4 et 30 et m est un nombre entier entre 4 et 20.

6. Procédé selon la revendication 1 ou 2, dans lequel ledit matériau est un agrégat J d'un colorant.

7. Procédé selon la revendication 6, dans lequel ledit colorant est un colorant cyanine de formule 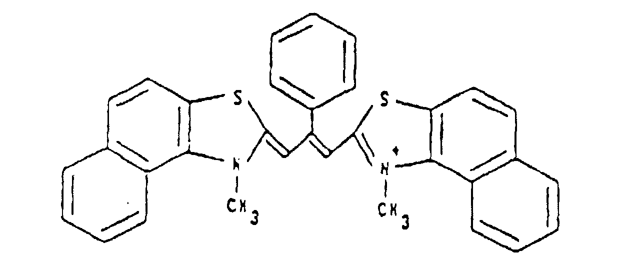 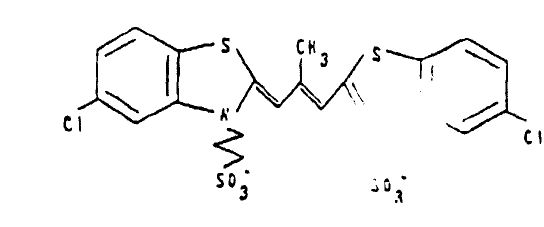 or

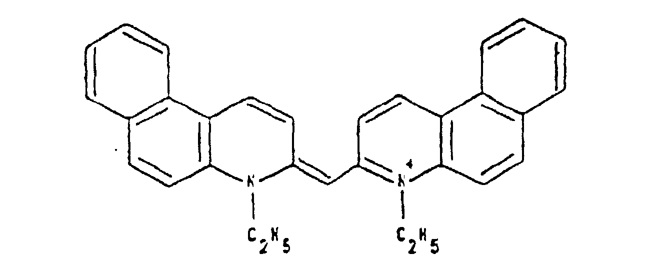

8. Procédé selon la revendication 6, dans lequel ledit colorant est un colorant mérocyanine de formule 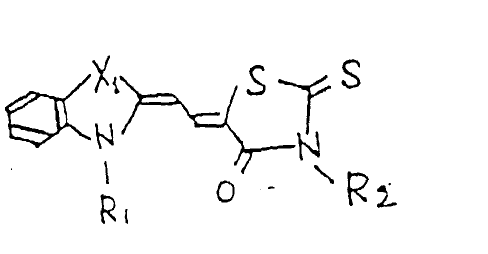 dans lequel X₁ représente C(CH₃)₂, O, S ou Se, R₁ représente (CH₂)ₙ₋₁CH₃ dans lequel n est nombre entier de 1 à 20, R₂ représente (CH₂)ₙ₋₁CH₃ dans lequel n est un nombre entier de 1 à 10 ou (CH₂)ₙ₋₁COOH dans lequel n est un nombre entier de 1 à 4.

9. Procédé selon la revendication 6, dans lequel ledit colorant est un colorant squarilium de formule 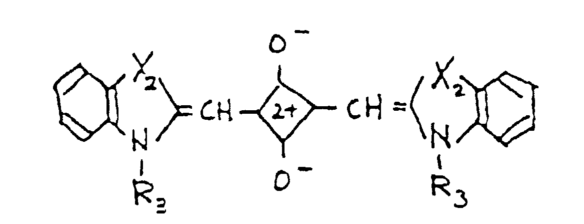 dans lequel chaque X₂ représente C(CH₃)₂, S ou Se, et chaque R₃ représente (CH₂)ₙ₋₁CH₃ dans lequel n est un nombre entier de 1 à 30, ou 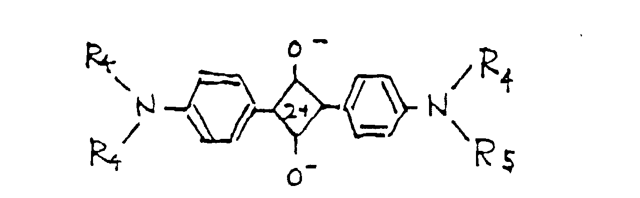 dans lequel chaque R₄ et R₅ représentant (CH₂)ₙ₋₁CH₃ dans lequel n est un nombre entier de 1 à 30.

10. Procédé selon ia revendication 1 ou 2, dans lequel ledit matériau est un mélange de colorant pyrilium et d'un polycarbonate selon les formules respectives, 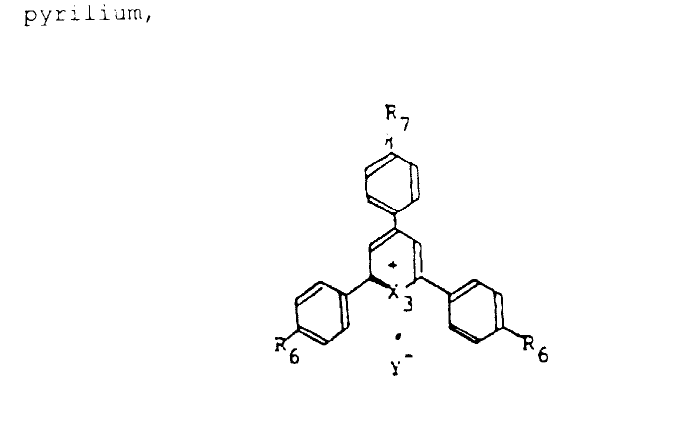 dans lequel X₃ représente O ou S, Y représentant Cl⁻, ClO₄⁻ ou BF₄⁻, chaque R₆ représente H ou CH₃, et R₇ représente H, CH₃, N(C₂H₅)₂, ou N(CH₃)² 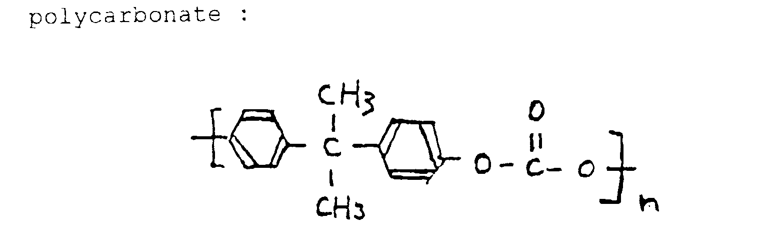 dans lequel n est un nombre entier.

11. Procédé selon l'une quelconque des revendications précédentes, dans lequel ladite couche d'enregistrement est constituée d'au moins deux sous-couches de matériau qui présentent des longueurs d'onde maximum d'absorption différentes et qui subissent des changements d'indice de réfraction différents lors de l'absorption de la lumière à leurs longueurs d'onde d'absorption maximum.
